# EUROPÄISCHE PATENTSCHRIFT

(11) **EP 2 777 871 B1**
(45) Veröffentlichungstag und Bekanntmachung des Hinweises auf die Patenterteilung: **27.05.2015**
(21) Anmeldenummer: 13001232.1
(22) Anmeldetag: 12.03.2013
(51) Int. Cl.: B23Q 1/01, B23Q 3/155, B23Q 11/08, B23Q 11/00, B23Q 11/10, B23Q 41/04

(54) **Bearbeitungszentrum mit einer Maschinenumhausung**
Machining centre with a machine housing
Centre de traitement doté d'une système d'enveloppement de machine

(43) Veröffentlichungstag der Anmeldung: 17.09.2014
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Hager, Konrad, 72362 Nusplingen (DE)
(74) Vertreter: Hoefer & Partner

(56) Entgegenhaltungen:
- EP-A1- 1 321 224
- DE-U1-202011 104 037
- US-A1- 2006 269 375
- US-A1- 2008 187 406

## Beschreibung

Die vorliegende Erfindung betrifft ein Bearbeitungszentrum in Kompaktbauweise, insbesondere für die spanende Fräs-, Bohr- und/oder Drehbearbeitung, mit einem Maschinengestell für die Aufnahme einer werkzeugtragenden und einer werkstücktragenden Baugruppe, mit einer Maschinenumhausung, die das Bearbeitungszentrum an den Umfangseiten umschließt, und mit Versorgungs- und Entsorgungseinheiten.

Ein Bearbeitungszentrum der eingangs genannten Art ist in der EP 1 634 675 B1 erläutert.

Unter dem Begriff "Bearbeitungszentrum in Kompaktbauweise" wird im Sinne der vorliegenden Erfindung ein Bearbeitungszentrum verstanden, das im fertig montierten Zustand zum Maschinenbetreiber transportiert und dann zum Beispiel mit Hilfe eines Krans aufgestellt werden kann. Dabei werden die am Maschinengestell in angenäherter Position angebrachten Versorgungs- und Entsorgungseinheiten (z. B. die Zusatz- und Nebenaggregate) in der Regel erst nach der Maschinenaufstellung vor Ort beim Maschinenbetreiber in eine vom Maschinengestell beabstandete Position gebracht. Ein Bearbeitungszentrum in Kompaktbauweise wird in der Fachwelt auch gelegentlich als sogenannte Hakenmaschine bezeichnet. Bei einem Bearbeitungszentrum in Kompaktbauweise (Hakenmaschine) wird das Bearbeitungszentrum am Ort seiner Herstellung, beim Maschinenhersteller, fast komplett mit allen relevanten Versorgungs- und Entsorgungseinheiten fertig montiert und auch entsprechend verkabelt. Dies reduziert die Montagezeiten beim Maschinenbetreiber vor Ort ganz erheblich gegenüber einer Lieferung in Teilkomponenten an den Maschinenbetreiber und dortiger Endmontage und Verkabelung.

Unter dem Begriff "Maschinenumhausung" wird im Sinne der vorliegenden Erfindung eine trennende Schutzeinrichtung verstanden, welche die Arbeits- und Wartungsstationen im Bearbeitungszentrum umfangsseitig komplett umschließt. Die Maschinenumhausung schützt die Umgebung vor umherfliegenden Spänen, Kühlschmierstoffpartikeln oder Werkzeugbruchstücken, die aufgrund eines Maschinencrash entstehen können, und verringert den außerhalb der Maschinenumhausung auftretenden Bearbeitungsschallpegel. Außerdem verhindert die Maschinenumhausung den Zugriff des Bedieners zu den gefährlichen und sehr schnellen Vorschub- und Spindelbewegungen des Bearbeitungszentrums. Um auf die Arbeits- und Wartungsstationen des Bearbeitungszentrums zugreifen zu können, ist die Maschinenumhausung mit einer oder mehreren Zugangstüren versehen. Ferner weist die Maschinenumhausung eine oder mehrere Sichtscheiben auf, durch die von außen in die Arbeits- und ggf. in die Wartungsstationen des Bearbeitungszentrums eingesehen werden kann.

Unter dem Begriff "Entsorgungseinheiten" sind im Sinne der vorliegenden Erfindung ganz allgemein Zusatz- und Nebenaggregate zur Entsorgung der Bearbeitungsrückstände aus den Arbeitsstationen des Bearbeitungszentrums zu verstehen. Bearbeitungsrückstände entstehen prozessbedingt bei der spanenden Werkstückbearbeitung und können in den Aggregatzuständen fest, flüssig oder gasförmig vorliegen. Folgende Einrichtungen zählen im Sinne der vorliegenden Erfindung zu den Entsorgungseinheiten:
a) Kraftbetriebener Späneförderer für den Abtransport der Bearbeitungsspäne aus der Arbeitsstation der Werkzeugspindel.
b) Kraftbetriebene Pumpeinrichtung mit einem Auffangbehälter (Tank), um den für die spanende Bearbeitung notwendigen Kühlschmierstoff (wassermischbarer Kühlschmierstoff oder Schneidöl) in und aus der Arbeitsstation der Werkzeugspindel zu transportieren.
c) Kraftbetriebe Absaugeinrichtung für die Absaugung der bei der spanenden Bearbeitung entstehenden Abgase, wie zum Beispiel Dämpfe und Rauche.

Unter dem Begriff "Versorgungseinheiten" sind im Sinne der vorliegenden Erfindung ganz allgemein Zusatz- und Nebenaggregate für die Versorgung des Bearbeitungszentrums mit elektrischer, pneumatischer und hydraulischer Energie, mit Betriebshilfsstoffen und mit Kälteenergie zu verstehen. Folgende Einrichtungen zählen in Sinne der vorliegenden Erfindung zu den Versorgungseinheiten:
a) Elektrischer Schaltschrank mit dem elektrischen Netzanschluss für die elektrische Energie.
b) Pneumatische Wartungseinheit mit dem pneumatischen Netzanschluss für die pneumatische Energie.
c) Kraftbetriebenes Hydraulikaggregat für die hydraulische Energie.
d) Kraftbetriebene Schmiermittelversorgungseinheit für die Führungs- und Lagerschmierung.
e) Kraftbetriebenes Kühlaggregat (Luft-Wärmetauscher oder Wasser-Wärmetauscher oder Kompressor-Kühlaggregat) für die Kühlenergie, die für die Kühlung der Synchron- oder Asynchronmotoren im Bearbeitungszentrum benötigt wird.

Unter dem Begriff "Arbeitsstation" wird im Sinne der vorliegenden Erfindung der Raum in einem Bearbeitungszentrum verstanden, in dem die Werkstückbearbeitung stattfindet, das heißt, der Raum, in dem die Bearbeitungsspäne anfallen. Weiterhin wird unter dem Begriff Arbeitsstation auch noch der Raum in einem Bearbeitungszentrum verstanden, in dem die Bearbeitungswerkzeuge gespeichert werden und in dem der Werkzeugwechsel stattfindet. An einem Bearbeitungszentrum können sich ein- oder mehrere Arbeitsstationen befinden, die alle für das Bedienpersonal in ergonomisch sinnvoller Weise zugänglich gemacht werden müssen, d. h. Arbeitsstation mit Bedienerzugang.

Unter dem Begriff "Wartungsstation" werden im Sinne der vorliegenden Erfindung alle Räume in oder an einem Bearbeitungszentrum verstanden, die für das Instandhaltungspersonal in ergonomisch sinnvoller Weise zugänglich gemacht werden müssen, so dass dort dann die vorgeschriebenen Wartungs-, Inspektions- und Messarbeiten an den betreffenden Maschinenkomponenten durchgeführt werden können. An einem Bearbeitungszentrum befinden sich auf Grund der Maschinenkomplexität in der Regel immer mehrere Wartungsstationen, d. h. Wartungsstation mit Bedienerzugang.

Bei Maschinen der eingangs genannten Gattung sind die Zugänge zu den Arbeits- und Wartungsstationen weitgehend über die gesamte umfangseitige Maschinenumhausung verteilt. Des Weiteren werden die für den Betrieb des Bearbeitungszentrums notwendigen und Platz beanspruchenden Versorgungs- und Entsorgungseinheiten in Abhängigkeit vom bestehenden Platzangebot weitgehende an die Maschinenumhausung des Bearbeitungszentrums mit oder ohne räumlichen Abstand angestellt bzw. teilweise auf oder an die Maschinenumhausung des Bearbeitungszentrums angebaut.

Bei derartigen Bearbeitungszentren wird es allgemein als Nachteil empfunden, dass aufgrund der verschiedenen Zugänge zu den Arbeits- und Wartungsstationen und zu den diversen Versorgungs- und Entsorgungseinheiten relativ viel freier Raum um das Bearbeitungszentrum frei gehalten werden muss, um einen Zugang für das Bedien- und Wartungspersonal in ergonomisch sinnvoller Weise zu ermöglichen. Dieser frei zu haltende Raum steht dann für andere Aufgaben nicht mehr zur Verfügung und ist daher gewissermaßen ein verschenkter Raum. Zum Beispiel wird der optionale Anbau einer automatischen Werkstückwechseleinrichtung (Handlingsystem, Roboter usw.) für die automatische Be-und Entladung der werkstücktragenden Baugruppe an das Bearbeitungszentrums durch den sehr eingeschränkten freien Raum um das Bearbeitungszentrum herum wesentlich verkompliziert.

Außerdem ist der für die Aufstellung des Bearbeitungszentrums mit seinen Versorgungs- und Entsorgungseinheiten erforderliche Platzbedarf relativ groß. Durch die angestellten oder auf- bzw. angebauten Versorgungs- und Entsorgungseinheiten werden die Außenabmessungen des Bearbeitungszentrums in allen drei linearen Raumrichtungen wesentlich vergrößert.

Dies alles stellt unter dem Gesichtspunkt des sehr teuren Aufstellraumes für ein Bearbeitungszentrum keinen unbedeutenden wirtschaftlichen Gesichtspunkt dar.

Ferner ist eine mögliche Wand nahe Maschinenaufstellung des Bearbeitungszentrums bzw. eine enge und dichte Maschinenaufstellung von mehreren Bearbeitungszentren in Reihen nebeneinander oder hintereinander bei den Maschinen der eingangs genannten Gattung in der Regel nur sehr eingeschränkt sinnvoll realisierbar.

Vor diesem Hintergrund liegt der vorliegenden Erfindung die Aufgabe zugrunde, das eingangs erwähnte Bearbeitungszentrum derart weiterzubilden, dass eine größere Flexibilität bei der Maschinenaufstellung möglich wird und dass die Integration eines Werkstückwechselsystems an das Bearbeitungszentrum in einfacher und platzsparender Weise realisierbar ist, ohne dass dabei die Zugänglichkeit zu den Arbeits- und Wartungsstationen und zu den Versorgungs- und Entsorgungseinheiten merklich eingeschränkt wird.

Des Weiteren soll der Platzbedarf bzw. das Platzvolumen des Bearbeitungszentrums mit seinen Versorgungs- und Entsorgungseinheiten gegenüber den bekannten Bearbeitungszentren noch einmal deutlich verringert werden.

Ferner soll eine enge und damit platzsparende Aufstellung des Bearbeitungszentrums realisierbar sein, ohne dabei die Zugänglichkeit zu den einzeln Arbeits- und Wartungsstationen im Bearbeitungszentrum zu schmälern.

Diese erfindungsgemäße Aufgabe wird erfindungsgemäß mit einem Bearbeitungszentrum gemäß Anspruch 1 gelöst.

Durch bewusstes Freilassen der einen Seitenwand von jeglichen Entsorgungs-und Versorgungseinheiten und von jeglichen Bedienerzugängen zu den Arbeits-und Wartungsstationen und durch die bewusste Zuordnung aller Versorgungs-und Entsorgungseinheiten zu der anderen Seitenwand kann in einfacher Weise bei einem Bearbeitungszentrum in Kompaktbauweise eine flexible, enge und platzsparende Aufstellung realisiert werden; und dies auch in Bezug auf die Integration einer automatischen Werkstückwechseleinrichtung an das Bearbeitungszentrum. Dadurch kann die Hallenfläche bzw. der Hallenraum optimaler ausgenutzt werden, und es wird kein unnötig teurer Aufstellplatz verschenkt. Das verfügbare Platzangebot zur Aufstellung des Bearbeitungszentrums kann somit optimal ausgenutzt werden, und die Werkstückwechseleinrichtung kann in platzsparender Weise an das Bearbeitungszentrum angeordnet werden.

Vorteilhafte Weiterbildungen ergeben sich aus den Unteransprüchen.

Gemäß einer bevorzugten Weiterbildung sind die Versorgungseinheiten für Pneumatik, Hydraulik und Schmiermittel zu einer funktional zusammenhängenden und modular aufgebauten eigenständigen Fluid- und Schmiermittelbaugruppe zusammengefasst.

Gemäß einer weiteren bevorzugten Weiterbildung sind die Entsorgungseinheiten für Bearbeitungsspäne und Kühlmittel zu einer funktional zusammenhängenden und modular aufgebauten eigenständigen Späne- und Kühlmittelbaugruppe zusammengefasst.

Gemäß einer weiteren bevorzugten Weiterbildung sind die Entsorgungseinheit für Abgase und die Versorgungseinheiten für Kälteenergie und elektrische Energie jeweils zu einer eigenständigen Baugruppe zusammengefasst

Gemäß einer vorteilhaften Ausgestaltung ist die erste Seitenwand mit der Fluid-und Kühlschmiermittelbaugruppe, der Entsorgungseinheit für Abgase und den Versorgungseinheiten für Kälteenergie und elektrische Energie versehen.

Gemäß einer weiteren vorteilhaften Ausgestaltung besitzt die erste Seitenwand einen Freiraum zum Ein- und Anstellen der Entsorgungseinheiten für Bearbeitungsspäne und Kühlmittel.

Gemäß einer weiteren vorteilhaften Ausgestaltung weisen die Entsorgungseinheiten für Bearbeitungsspäne und Kühlmittel einen verfahrbaren Späneförderer auf. Der Späneförderer kann somit mit wenigen Handgriffen seitlich von der ersten Seitenwand und aus dem Maschinengestell herausgefahren werden.

Gemäß einer weiteren vorteilhaften Ausführung weist der Späneförderer einen Auswurfschacht auf, der nahe und ohne großen räumlichen Abstand an der ersten Seitenwand angeordnet ist.

Gemäß einer weiteren vorteilhaften Ausführung ist eine Be- und Entladetür zum Arbeitsraum der werkzeugtragenden Baugruppe an einer ersten Querwand der Maschinenumhausung angeordnet, und an einer zweiten Querwand ist eine Be-und Entladetür zu einem beweglichen Werkzeugmagazinspeicher angeordnet.

Vorteilhafterweise ist die zweite Querwand als schräg abgestufte Querwand ausgeführt.

Gemäß einer weiteren vorteilhaften Ausführung ist an der zweiten Querwand eine Zugangstür zu im Bearbeitungszentrum vorhandenen Wartungsstationen angeordnet.

Gemäß einer weiteren vorteilhaften Ausführung ist die zweite Seitenwand mit einer kraftbetätigten Werkstückbeladetrennwand versehen, durch welche eine seitliche Werkstückbeladung möglich ist.

Gemäß einer weiteren vorteilhaften Ausführung ist der Werkzeugmagazinspeicher noch zusätzlich über die Be- und Entladetür der ersten Querwand mit Bearbeitungswerkzeugen bestückbar. Somit kann der Werkzeugmagazinspeicher innerhalb des Maschinengestells auch noch zusätzlich über die Be- und Entladetür zum Arbeitsraum der Werkzeugspindel mit Hilfe der Werkzeugspindel im Pick-Up-Verfahren mit Bearbeitungswerkzeugen bestückt werden. Dazu wird per Hand das Bearbeitungswerkzeug in die Werkzeugspindel eingesetzt, die dann das Bearbeitungswerkzeug im Pick-Up-Verfahren in den Werkzeugmagazinspeicher ablegt.

Weitere Einzelheiten, Merkmale und Vorteile der Erfindung ergeben sich aus der nachfolgenden Beschreibung anhand der Zeichnungen. Es zeigen:

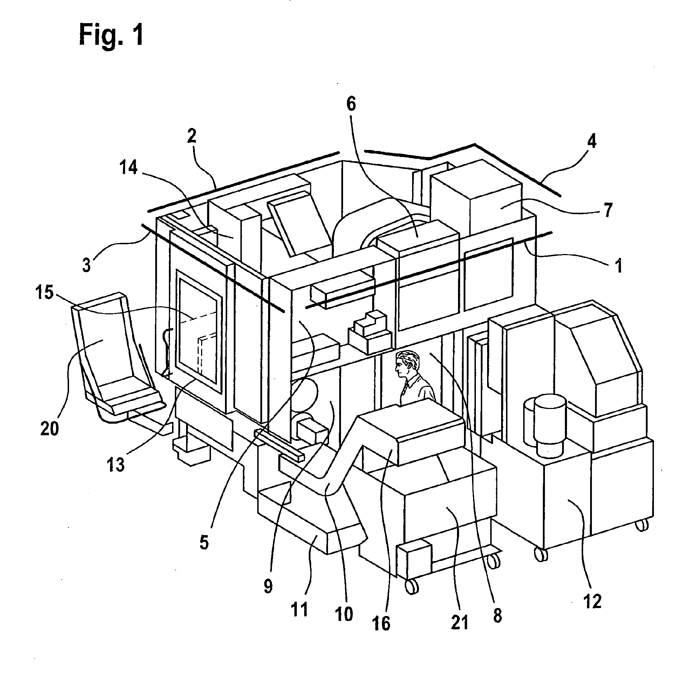

- Figur 1: eine perspektivische Ansicht eines erfindungsgemäßen Bearbeitungszentrums von oben/vorne, und

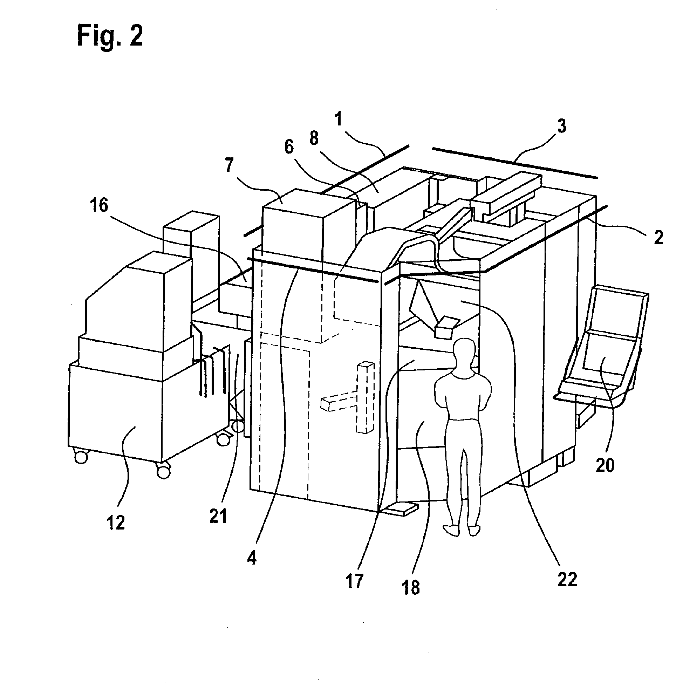

- Figur 2: eine perspektivische Ansicht des erfindungsgemäßen Bearbeitungszentrums von oben/hinten.

Das erfindungsgemäße Bearbeitungszentrum in Kompaktbauweise weist eine annähernd quaderförmige Grundbauform auf und dient insbesondere als multifunktionales Bearbeitungszentrums für die spanende Fräs-, Bohr- und/oder Drehbearbeitung.

Das Bearbeitungszentrum weist ein Maschinengestell für die Aufnahme einer werkzeugtragenden und einer werkstücktragenden Baugruppe auf. Die werkzeugtragende Baugruppe, die in drei linearen Raumrichtungen innerhalb eines Arbeitsraumes 15 gesteuert verfahren werden kann, ist mit einer vertikal ausgerichteten Werkzeugspindel 14 versehen. Die werkstücktragende Baugruppe kann in zwei rotativen Raumrichtungen gesteuert verfahren werden.

An dem Maschinengestell ist eine drehbare Bedienstelle 20 mit Maschinenbedienpult und Maschinenbildschirm angeordnet.

Das Bearbeitungszentrum ist weiterhin mit einem bewegbaren Werkzeugmagazinspeicher versehen, der innerhalb des Maschinengestells gelagert und für einen Werkzeugwechsel im Pick-Up-Verfahren vorgesehen ist. Bei einem Werkzeugwechsel im Pick-Up-Verfahren kann die Werkzeugspindel 14 das Bearbeitungswerkzeug direkt und ohne zu Hilfenahme einer externen Werkzeugwechselvorrichtung vom Werkzeugmagazinspeicher übernehmen und an diesen auch wieder abgeben. Der Werkzeugmagazinspeicher ist vorzugsweise mit einem drehbaren Werkzeugmagazinring mit kraft- und formschlüssigen Halterungen für eine Vielzahl von Bearbeitungswerkzeugen ausgestattet.

Das Bearbeitungszentrum ist weiterhin mit einer Maschinenumhausung versehen, welche das Bearbeitungszentrum an den vier Umfangseiten komplett und vollständig umschließt. Die Maschinenumhausung weist eine erste Längswand 1, eine zweite Längswand 2, eine erste Querwand 3 und eine zweite Querwand 4 auf. Die beiden Längswände 1, 2 und die beiden Querwände 3, 4 liegen sich jeweils im Wesentlichen parallel gegenüber, so dass sich eine im Wesentlichen quaderförmige Form der Maschinenumhausung ergibt.

In der Maschinenumhausung ist eine Be- und Entladetür 13 für den Zugang zu dem Arbeitsraum 15 der Werkzeugspindel 14, eine Be- und Entladetür 18 für den Zugang zu der Arbeitsstation 17 des bewegbaren Werkzeugmagazinspeichers und mindestens eine Zugangstür 22 für den Zugang zu den Wartungsstationen im Bearbeitungszentrum vorgesehen.

Weiterhin sind an der Maschinenumhausung Versorgungs- und Entsorgungseinheiten 5, 6, 7, 8, 10, 11, 12 angeordnet, welche für den Betrieb des Bearbeitungszentrums notwendig sind.

Sämtliche Versorgungs- und Entsorgungseinheiten 5, 6, 7, 8, 10, 11, 12 sind ausschließlich an der ersten Seitenwand 1 der Maschinenumhausung angeordnet, während die zweite, der ersten Seitenwand 1 im Wesentlichen parallel gegenüberliegende Seitenwand 2 als freie Verkleidungswand ausgebildet ist und weder Versorgungs- und Entsorgungseinheiten 5, 6, 7, 8, 10, 11, 12, noch Zugangstüren 22 zu den Wartungsstationen im Bearbeitungszentrum, noch Be-und Entladetüren 13, 18 zu den Arbeitsstationen im Bearbeitungszentrum aufweist.

Über die zweite Seitenwand 2 kann lediglich eine automatische Werkstückwechseleinrichtung an das Bearbeitungszentrum angebaut werden.

Die Versorgungs- und Entsorgungseinheiten sind zu funktional zusammenhängenden und modular aufgebauten eigenständigen Baugruppen zusammengefasst. So bilden die Versorgungseinheiten für Pneumatik, Hydraulik und Schmiermittel eine funktional zusammenhängende und modular aufgebaute eigenständige Fluid- und Schmiermittelbaugruppe 5, die Entsorgungseinheiten für Bearbeitungsspäne 10 und die Entsorgungseinheit für Kühlmittel 11, 12 bilden eine funktional zusammenhängende und modular aufgebaute eigenständige Späne- und Kühlmittelbaugruppe und die Entsorgungseinheit für Abgase 6 und die Versorgungseinheiten für Kälteenergie 7 und elektrische Energie 8 bilden ebenfalls jeweils eine eigenständige Baugruppe.

Die erste Seitenwand 1 ist folglich mit der Fluid- und Kühlschmiermittelbaugruppe 5, der Entsorgungseinheit für Abgase 6 und den Versorgungseinheiten für Kälteenergie 7 und elektrische Energie 8 versehen.

Die erste Seitenwand 1, die mit den diversen Versorgungs- und Entsorgungseinheiten 5, 6, 7, 8, 10, 11, 12 versehen ist, weist einen Freiraum 9 zum nahen Ein- und Anstellen der Entsorgungseinheiten für Bearbeitungsspäne und Kühlmittel 10, 11 an das Maschinengestell des Bearbeitungszentrums auf.

Die Entsorgungseinheiten für Bearbeitungsspäne und Kühlmittel 10, 11, 12 weisen einen verfahrbaren kraftbetriebenen Späneförderer auf, der mit wenigen Handgriffen seitlich von der ersten Seitenwand 1 und aus dem Maschinengestell herausgefahren werden kann.

Der Späneförderer ist mit einem Auswurfschacht 16 versehen, der ohne großen räumlichen Abstand nahe der ersten Seitenwand 1 angeordnet werden kann. Unter den Auswurfschacht 16 kann ein Spänewagen 21 geschoben werden.

In der ersten Querwand 3 ist eine Be- und Entladetür 13 vorgesehen, die zum Arbeitsraum 15 der werkzeugtragenden Baugruppe führt, und in der zweiten Querwand 4 ist eine Be- und Entladetür 18 vorgesehen, die zu dem beweglichen Werkzeugmagazinspeicher führt.

Zumindest eine der Querwände 3, 4, vorzugsweise die zweite Querwand 4 kann als schräg abgestufte Querwand ausgeführt sein.

In der zweiten Querwand 4 ist zusätzlich zu der Belade- und Entladetür 18 zum beweglichen Werkzeugmagazinspeicher auch noch die Zugangstür 22 vorgesehen, welche den Zutritt zu im Bearbeitungszentrum vorhandenen Wartungsstationen ermöglicht.

Die zweite Seitenwand 2, die frei von Versorgungs- und Entsorgungseinheiten 5, 6, 7, 8, 10, 11, 12 und ohne Bedienerzugänge 13, 18, 22 zu den Arbeits- und Wartungsstationen ist, ist mit einer kraftbetätigten Werkstückbeladetrennwand 19 (nicht dargestellt) versehen, durch welche eine seitliche Werkstückbeladung in den Arbeitsraum der Werkzeugspindel 14 mit Hilfe einer automatischen Werkstückwechseleinrichtung möglich ist.

Der innerhalb des Maschinengestells angeordnete Werkzeugmagazinspeicher ist auch noch zusätzlich über die Be- und Entladetür 13 der ersten Querwand 3 mit Hilfe der Werkzeugspindel14 im Pick-Up-Verfahren mit Bearbeitungswerkzeugen bestückbar. Dazu wird per Hand das Bearbeitungswerkzeug in die Werkzeugspindel 14 eingesetzt, die dann das Bearbeitungswerkzeug im Pick-Up-Verfahren in den Werkzeugmagazinspeicher ablegt.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung wie durch die Ansprüche definiert sowie ihrer Äquivalente zu verlassen.

### Bezugszeichenliste

| | |
|---|---|
| 1 | erste Seitenwand |
| 2 | zweite Seitenwand |
| 3 | erste Querwand |
| 4 | zweite Querwand |
| 5 | Fluid- und Schmiermittelbaugruppe |
| 6 | Entsorgungseinheit für Abgase |
| 7 | Versorgungseinheit für Kälteenergie |
| 8 | Versorgungseinheit für elektrische Energie |
| 9 | Freiraum |
| 10 | Entsorgungseinheit für Bearbeitungsspäne |
| 11 | Entsorgungseinheit für Kühlmittel |
| 12 | Entsorgungseinheit für Kühlmittel |
| 13 | Be- und Entladetür |
| 14 | Werkzeugspindel |
| 15 | Arbeitsraum |
| 16 | Auswurfschacht |
| 17 | Arbeitsstation |
| 18 | Be- und Entladetür |
| 19 | Werkstückbeladetrennwand (nicht dargestellt) |
| 20 | Bedienstelle |
| 21 | Spänewagen |
| 22 | Zugangstür |

## Patentansprüche

1. Bearbeitungszentrum in Kompaktbauweise, insbesondere für die spanende Fräs-, Bohr- und/oder Drehbearbeitung, mit einem Maschinengestell für die Aufnahme einer werkzeugtragenden und einer werkstücktragenden Baugruppe, mit einer Maschinenumhausung, die das Bearbeitungszentrum an den Umfangseiten umschließt, und mit Versorgungs- und Entsorgungseinheiten, **dadurch gekennzeichnet, dass** alle Versorgungs- und Entsorgungseinheiten (5, 6, 7, 8, 10, 11, 12) ausschließlich an einer ersten Seitenwand (1) der Maschinenumhausung angeordnet sind, dass eine der ersten Seitenwand (1) gegenüberliegende zweite Seitenwand (2) der Maschinenumhausung als freie Verkleidungswand ausgebildet ist und weder Versorgungs- und Entsorgungseinheiten (5, 6, 7, 8 ,10, 11,12) noch Zugangstüren (22) zu den Wartungsstationen im Bearbeitungszentrum, noch Be- und Entladetüren (13, 18) zu den Arbeitsstationen im Bearbeitungszentrums aufweist, und dass über die zweite Seitenwand (2) eine automatische Werkstückwechseleinrichtung an das Bearbeitungszentrum anbaubar ist und dass die erste Seitenwand (1) mit der Fluid- und Kühlschmierbaugruppe (5), der Entsorgungseinheit für Abgase (6) und den Versorgungseinheiten für Kälteenergie (7) und elektrischer Energie (8) versehen ist.

2. Bearbeitungszentrum nach Anspruch 1, **dadurch gekennzeichnet, dass** die Versorgungseinheiten für Pneumatik, Hydraulik und Schmiermittel zu einer funktional zusammenhängenden und modular aufgebauten eigenständigen Fluid- und Schmiermittelbaugruppe (5) zusammengefasst sind.

3. Bearbeitungszentrum nach einem der vorhergehenden Ansprüche, **dadurch gekennzeichnet, dass** die Entsorgungseinheiten für Bearbeitungsspäne (10) und Kühlmittel (11, 12) zu einer funktional zusammenhängenden und modular aufgebauten eigenständigen Späne- und Kühlmittelbaugruppe zusammengefasst sind.

4. Bearbeitungszentrum nach einem der vorhergehenden Ansprüche, **dadurch gekennzeichnet, dass** die Entsorgungseinheit für Abgase (6) und die Versorgungseinheiten für Kälteenergie (7) und elektrische Energie (8) zu einer eigenständigen Baugruppe zusammengefasst sind.

5. Bearbeitungszentrum nach einem der vorhergehenden Ansprüche, **dadurch gekennzeichnet, dass** die erste Seitenwand (1) einen Freiraum (9) zum Ein- und Anstellen der Entsorgungseinheiten für Bearbeitungsspäne und Kühlmittel (10, 11, 12) besitzt.

6. Bearbeitungszentrum nach einem der Ansprüche 3 bis 5, **dadurch gekennzeichnet, dass** die Entsorgungseinheiten für Bearbeitungsspäne und Kühlmittel (10, 11, 12) einen verfahrbaren Späneförderer aufweisen.

7. Bearbeitungszentrum nach Anspruch 6, **dadurch gekennzeichnet, dass** der Späneförderer einen Auswurfschacht (16) aufweist, der nahe an der ersten Seitenwand (1) angeordnet ist.

8. Bearbeitungszentrum nach einem der vorhergehenden Ansprüche, **dadurch gekennzeichnet, dass** eine Be- und Entladetür (13) zum Arbeitsraum (15) der werkzeugtragenden Baugruppe an einer ersten Querwand (3) der Maschinenumhausung angeordnet ist und dass an einer zweiten Querwand (4) eine Be- und Entladetür (18) zu einem beweglichen Werkzeugmagazinspeicher angeordnet ist.

9. Bearbeitungszentrum nach Anspruch 8, **dadurch gekennzeichnet, dass** die zweite Querwand (4) als schräg abgestufte Querwand ausgeführt ist.

10. Bearbeitungszentrum nach Anspruch 8 oder 9, **dadurch gekennzeichnet, dass** an der zweiten Querwand (4) eine Zugangstür (22) zu im Bearbeitungszentrum vorhandenen Wartungsstationen angeordnet ist.

11. Bearbeitungszentrum nach einem der vorhergehenden Ansprüche **dadurch gekennzeichnet, dass** die zweite Seitenwand (2) mit einer kraftbetätigten Werkstückbeladetrennwand versehen ist, durch welche eine seitliche Werkstückbeladung möglich ist.

12. Bearbeitungszentrum nach einem der vorhergehenden Ansprüche, **dadurch gekennzeichnet, dass** der Werkzeugmagazinspeicher über die Be- und Entladetür (13) mit Bearbeitungswerkzeugen bestückbar ist.

## Claims

1. A machining center of a compact construction, in particular for milling, drilling and/or turning machining by cutting, comprising: a machine frame configured to receive a tool-carrying assembly and a workpiece-carrying assembly, a machine enclosure which encloses the machining center at the peripheral sides, and supply and disposal units, **characterized in that** all supply and disposal units (5, 6, 7, 8, 10, 11, 12) are exclusively arranged on a first side wall (1) of the machine enclosure, that a second side wall (2) of the machine enclosure that is opposite to the first side wall (1) is configured as a free lining wall and comprises neither supply and disposal units (5, 6, 7, 8, 10, 11, 12) nor access doors (22) to the maintenance stations in the machining center, nor loading and unloading doors (13, 18) to the work stations in the machining center, and that an automatic workpiece changing device can be attached via the second side wall (2) to the machining center, and that the first side wall (1) is provided with the fluid and cooling lubricant assembly (5), the disposal unit for exhaust gases (6) and the supply units for cooling energy (7) and electrical energy (8).

2. The machining center of claim 1, **characterized in that** the supply units for pneumatics, hydraulics and lubricants are combined to form a functionally coherent and independent fluid and lubricant assembly (5) of a modular construction.

3. The machining center of any one of the preceding claims, **characterized in that** the disposal units for cutting chips (10) and coolants (11, 12) are combined to form a functionally coherent and independent chip and coolant assembly of a modular construction.

4. The machining center of any one of the preceding claims, **characterized in that** the disposal unit for exhaust gases (6) and the supply units for cooling energy (7) and electrical energy (8) are combined to form an independent assembly.

5. The machining center of any one of the preceding claims, **characterized in that** the first side wall (1) includes a free space (9) for installing and positioning the disposal units for cutting chips and coolants (11, 10, 12).

6. The machining center of any one of claims 3 to 5, **characterized in that** the disposal units for cutting chips and coolants (10, 11, 12) comprise a moveable chip conveyor.

7. The machining center of claim 6, **characterized in that** the chip conveyor comprises an ejection chute (16) which is arranged close to the first side wall (1).

8. The machining center of any one of the preceding claims, **characterized in that** a loading and unloading door (13) to the work room (15) of the tool-carrying assembly is arranged on a first cross wall (3) of the machine enclosure, and that a loading and unloading door (18) to a moveable tool magazine store is arranged on a second cross wall (4).

9. The machining center of claim 8, **characterized in that** the second cross wall (4) is configured as an obliquely stepped cross wall.

10. The machining center of claim 8 or 9, **characterized in that** an access door (22) to maintenance stations which are provided in the machining center is arranged on the second cross wall (4).

11. The machining center of any one of the preceding claims, **characterized in that** the second side wall (2) is provided with a force-operated workpiece-loading partition wall through which lateral workpiece loading is possible.

12. The machining center of any one of the preceding claims, **characterized in that** the tool magazine store can be equipped with machining tools via the loading and unloading door (13).

## Revendications

1. Centre d'usinage de forme compacte, en particulier pour l'usinage par fraisage, forage et/ou tournage d'enlèvement de copeaux, avec un bâti de machine pour la réception d'un ensemble portant l'outil et un ensemble portant la pièce, avec un carter machine qui entoure le centre d'usinage sur les côtés périphériques et avec des unités d'alimentation et d'élimination, **caractérisé en ce que** toutes les unités d'alimentation et d'élimination (5, 6, 7, 8, 10, 11, 12) sont exclusivement agencées sur une première paroi latérale (1) du carter machine, **en ce qu'**une seconde paroi latérale (2) opposée à la première paroi latérale (1) du carter machine est réalisée comme une paroi de revêtement libre et ne présente ni unités d'alimentation et d'élimination (5, 6, 7, 8, 10, 11, 12) ni portes d'accès (22) aux postes de maintenance dans le centre d'usinage, ni portes de chargement et de déchargement (13, 18) vers les postes de travail dans le centre d'usinage, et **en ce qu'**un dispositif de changement de pièce automatique peut être monté par la seconde paroi latérale (2) sur le centre d'usinage et **en ce que** la première paroi latérale (1) est pourvue de l'ensemble de fluide et de lubrifiant (5), de l'unité d'élimination pour des gaz d'échappement (6) et des unités d'alimentation pour de l'énergie frigorifique (7) et de l'énergie électrique (8).

2. Centre d'usinage selon la revendication 1, **caractérisé en ce que** les unités d'alimentation pour le pneumatique, l'hydraulique et le lubrifiant sont réunies pour former un ensemble de fluide et de lubrifiant (5) autonome à structure modulaire et à connexion fonctionnelle.

3. Centre d'usinage selon l'une quelconque des revendications précédentes, **caractérisé en ce que** les unités d'élimination pour des copeaux d'usinage (10) et des moyens de refroidissement (11, 12) sont réunies pour former un ensemble de copeaux et de moyen de refroidissement autonome à structure modulaire et à connexion fonctionnelle.

4. Centre d'usinage selon l'une quelconque des revendications précédentes, **caractérisé en ce que** l'unité d'élimination pour des gaz d'échappement (6) et les unités d'alimentation pour de l'énergie frigorifique (7) et de l'énergie électrique (8) sont réunies pour former un ensemble autonome.

5. Centre d'usinage selon l'une quelconque des revendications précédentes, **caractérisé en ce que** la première paroi latérale (1) possède un espace libre (9) pour le réglage/la mise en place des unités d'élimination pour des copeaux d'usinage et des moyens de refroidissement (10, 11, 12).

6. Centre d'usinage selon l'une quelconque des revendications 3 à 5, **caractérisé en ce que** les unités d'élimination pour des copeaux d'usinage et moyens de refroidissement (10, 11, 12) présentent un convoyeur de copeaux déplaçable.

7. Centre d'usinage selon la revendication 6, **caractérisé en ce que** le convoyeur de copeaux présente une colonne d'éjection (16) qui est agencée à proximité de la première paroi latérale (1).

8. Centre d'usinage selon l'une quelconque des revendications précédentes, **caractérisé en ce qu'**une porte de chargement et de déchargement (13) vers l'espace de travail (15) de l'ensemble portant l'outil est agencée sur une première paroi transversale (3) du carter machine et **en ce qu'**une porte de chargement et de déchargement (18) vers un stockage de magasin d'outil mobile est agencée sur une seconde paroi transversale (4).

9. Centre d'usinage selon la revendication 8, **caractérisé en ce que** la seconde paroi transversale (4) est réalisée comme une paroi transversale étagée en biais.

10. Centre d'usinage selon la revendication 8 ou 9, **caractérisé en ce qu'**une porte d'accès (22) à des postes de maintenance présents dans le centre d'usinage est agencée sur la seconde paroi transversale(4).

11. Centre d'usinage selon l'une quelconque des revendications précédentes, **caractérisé en ce que** la seconde paroi latérale (2) est pourvue d'une paroi de séparation de chargement de pièce à commande mécanique, par laquelle un chargement de pièce latéral est possible.

12. Centre d'usinage selon l'une quelconque des revendications précédentes, **caractérisé en ce que** le stockage de magasin d'outil peut être équipé d'outils d'usinage par le biais de la porte de chargement et de déchargement.
